# EUROPEAN PATENT APPLICATION

(11) **EP 2 009 767 A1**
(43) Date of publication of application: **31.12.2008**
(21) Application number: 07110986.2
(22) Date of filing: 25.06.2007
(51) Int. Cl.: H02K 3/14

(54) **A rotary AC machine**

(71) Applicant: ABB Research Ltd., 8050 Zürich (CH)
(72) Inventor: Rothman, Bengt, 723 36 Västeras (SE)
(74) Representative: Fröderberg, Anders Oskar

(57) **Abstract**

A rotary AC machine comprising a stator provided with a plurality of slots (10) in which there are provided stator coils (1), wherein each stator coil (1) comprises stator coil sides (2, 3) positioned in the slot length (L), and wherein the individual coil sides (2, 3) comprise a plurality of strands (5) that are transposed in relation to each other such that the coil sides (2, 3) define Roebel bars, and wherein the coils (1) define single turn-coils, in one end of which the coil sides (2, 3) of each coil (1) are interconnected by a coil end portion (4), and in the in other end of which each coil side (2, 3) is short circuited to a neighbouring coil side of another coil. The strands (5) are transposed only 180° in each slot length (L).

## Description

### TECHNICAL FIELD

The present invention relates to a rotary AC machine comprising a stator provided with a plurality of slots in which there are provided stator coils, wherein each stator coils comprises stator coil sides positioned in the slot length, and wherein the individual coil sides comprise a plurality of strands that are transposed in relation to each other such that the coil sides define Roebel bars, and wherein the coils define single turn-coils, in one end of which the coil sides of each coil are interconnected by a coil end portion, and in the in other end of which each coil side is short circuited to a neighbouring coil side of another coil.

Preferably, the single-turn coils of the invention are of a type commonly known as diamond shaped coils.

The invention is particularly suitable for rotary AC machines, preferably generators, with a power equal to or above approximately 1 MW.

### BACKGROUND OF THE INVENTION

Roebel bars are commonly used in stator windings of large rotary machine in order to cope with a magnetic field that will act on the bars in the stator slots upon operation of the machine and that differs over a cross section of each stator slot. Each bar is built from a large number of subconductors or strands which are insulated from each other. The bars are located in stator slots of the rotary machine. Normally, each stator slot is occupied by two bars, said bars defining a lower and an upper bar, said lower bar being closer to bottom of the slot, and said upper bar being positioned radially outside and on top of the lower bar.

Within the slot length the strands of each bar are transposed such that the voltage induced by the sum of the main and leakage fluxes is the same in each strand.

Normally each bar is formed by two stacks of strands that are placed side by side. Within the slot portion of a bar the strands are transposed by arranging that all strands of a stack thereof are inclined towards the bottom of the slot and all the strands of the adjacent stack are inclined upwards. When a strand reaches the top or bottom of the bar, it is bent to form a crossover which carries it from one stack to the other. In a normal bar, the strands of the bar present a 360° transposition, wherein each strand has two crossovers, and, after passing through the slot portions, each strand is in the same position as the one that it bore when it entered the slot. Thus each strand has the same mean depth in the slot and approximately the same leakage reactance.

Besides the type of bars that have been described above, there are also known bars in which the strands of the slot part are transposed 540°. There are also known bar designs in which there are more than two stacks of strands arranged side by side. Furthermore there are also designs in which cooling elements are inserted between individual strands, or solutions in which the strands themselves are hollow in order to permit internal cooling thereof.

However, for a given slot dimension and strand dimension, the number of strands is delimited by the number of crossovers that are to be accommodated in the slot portion. The 540° transposition requires a number of crossovers equal to 1½ times the number of strands; in the 360° transposition the number of crossovers is equal to the number of strands. The transposition of the strands also requires space in the length direction. In particular for short cores, in which the slot length is relatively short, it is difficult to find enough space for transpositions according to prior art.

### THE OBJECT OF THE INVENTION

It its an object of the present invention to present a rotary AC machine as initially defined, wherein said machine presents Roebel bars that are less space-requiring than conventional Roebel bars, thereby enabling a higher amount of conducting material to be arranged in the slots, and accordingly thereby increasing the efficiency of the machine.

### SUMMARY OF THE INVENTION

The object of the invention is achieved by means of a rotary AC machine as initially defined, characterised in that the strands are transposed 180° in each slot length. Provided that the coil is a single-turn coil that comprises two interconnected coil sides each of which is positioned in a respective slot, the total transposition of each strand will be 180° + 180°, i.e. 360°. Thereby, the inventive machine permits each strand of a double-stack bar to occupy all positions in both stacks when both coil sides are taken into consideration. The 180° transposition in each slot will require less space than a traditional 360° transposition, especially in the longitudinal direction of the slot. Thus, either a more compact machine, with maintained power, or a more powerful machine, of the same dimension as before, is permitted thanks to the invention, since the 180° transposition permits more conducting material, i.e. strand material, to be positioned in a slot of predetermined dimension than does the 360° transposition of prior art. Preferably each coil comprises two coil sides forming an upper bar and a lower bar respectively in a respective stator slot. Preferably, but not necessarily, each bar only comprises two neighbouring stacks of strands, each stack comprising the same amount of strands of equal dimension. There might be cooling elements provided inside or between separate strands. However, it is preferred that each cross section of the bar is symmetric with regard to the number and size of strands and cooling elements of each stack.

Preferably, not only some but all strands of a plurality of strands positioned in said slots are transposed 180°. Preferably, all slot sides of a plurality of slot sides provided in the slots of the stator present a 180° transposition of their strands in their respective dedicated slot. Thereby, a symmetry, favourable for the manufacturing simplicity as well as for the functionality of the machine, is obtained.

It is also preferred that individual coil sides of each coil are interconnected by a coil end portion located outside the slots, wherein strands in each such coil end portion are transposed 90° along said end portion. This transposition need not be a Roebel transposition. The transposition of the strands of the end portion will normally be achieved by means of a traditional twisting of the so called knuckle of the bar forming said end portion. Thereby, the strands exiting a first slot, in which the first of the two coil sides is positioned, will have an inverted position when entering a subsequent second slot, and, accordingly, losses will be further reduced.

Preferably, each coil comprises a pair of coil sides positioned in different stator slots, wherein each such pair is interconnected by a coil end portion located outside the slots, wherein the strands in each such coil end portion are transposed 90° along said end portion. Preferably, all strands of all coils provided in the stator slots are transposed 90° in their respective coil end portion. In other words, not only some but all coil end portions present a 90° transposition of the strands, which brings a symmetry to the machine that is favourable from a manufacturing point of view as well as a functional point of view. It is preferred that each strand of each coil is transposed 90° in said coil end portions.

Further features and advantages of the present invention will be presented in the following detailed description of a preferred embodiment.

### BRIEF DESCRIPTION OF THE DRAWINGS

An embodiment of the invention will, by way of example, be described more in detail with reference to the accompanying drawing on which:
Fig. 1 is a schematic view of a single-turn coil according to the invention,
Fig. 2 is a cross section of a coil side of the coil of fig. 1,
Fig. 3 is a side view of a coil side of the coil of figs. 1 and 2,
Fig. 4 is a side view of a first stack of strands of the coil side shown in fig. 3,
Fig. 5 is a side view of a second stack of strands of the coil side shown in fig. 3, and
Fig. 6 is a cross section showing the arrangement of two adjacent coil sides in a common stator slot and the strength of a magnetic field that the coil sides are subjected to in the slot.

### DETAILED DESCRIPTION OF THE INVENTION

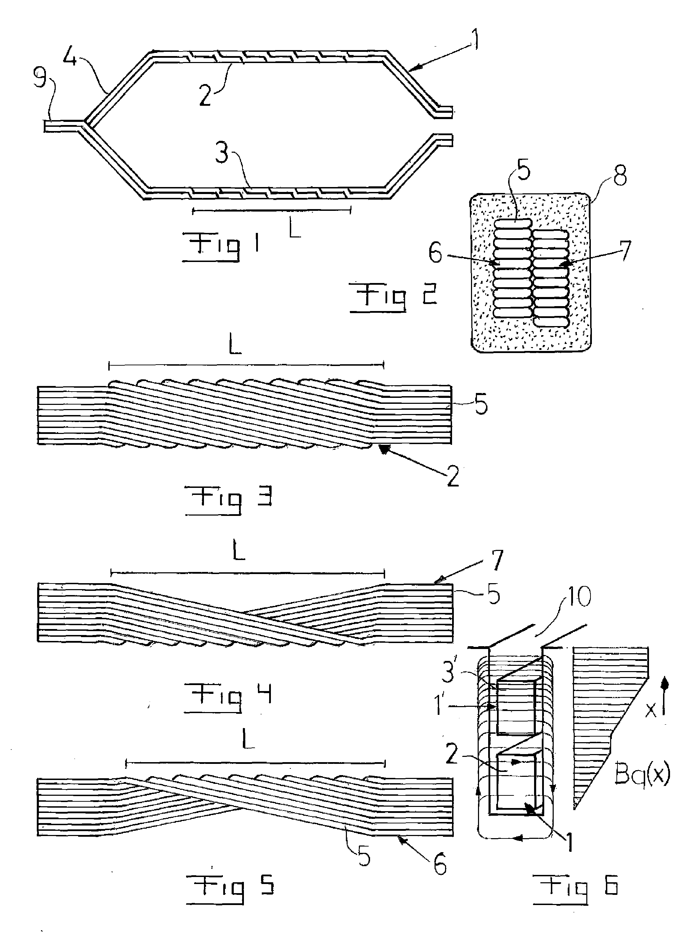

Fig. 1 shows a single-turn coil 1 that, according to the invention is to be arranged in a stator slots in a stator of a rotating AC machine. The coil 1 comprises a first coil side 2 and a second coil side 3, interconnected by an end portion 4, wherein the coil defines a so called diamond coil. At their ends opposite to the end portion 4, the first and second coil sides 2, 3 are interconnected, here short circuited, to a respective coil end of a respective neighbouring coil, as is known per se in prior art. The first coil side 2 is to be positioned in a first slot, with the length L, of the stator while the second coil side 3 is to be positioned in a corresponding second slot of the stator. As can be seen in fig. 6, each slot (10) is provided with a first coil side 2 and a second coil side 3' of two different coils 1, 1'. This kind of arrangement is well known and further explanation thereof should therefore not be necessary. It is to understood that the first coil side 2 of each coil 1 will define a bottom coil side on top of which a coil side of another coil is positioned, such as shown in fig. 6, while the second coil side 3 will define a top coil side positioned on top of a bottom coil side of another coil, in another slot. Also this principle is well known per se, thereby requiring no further explanation.

Fig. 2 shows a cross section of a coil side of a coil according to one embodiment of the invention. The coil 1 is formed by a bar that comprises a plurality of strands 5 that are equally distributed in two neighbouring stacks 6, 7. Each strand 5 is individually electrically insulated from the other strands 5, and the stacks 6, 7 are enclosed in a common electric insulation 8.

Along the slot length L the strands 5 are intertwined or transposed with regard to their position in accordance with the Roebel principle. However, while a traditional Roebel transposition suggests a 360° transposition of each strand along each slot length L, the strands 5 of the coil sides 2, 3 according to the invention are only transposed 180° along each slot length L. The intertwining or transposition of the strands 5 is further shown in figs. 3-5. Fig. 3 is a side view showing a coil side 2, 3 along the slot length L of a stator. Fig. 4 is a side view showing the transposition along the slot length L of the strands 5 that are initially all positioned in the first stack 6, while fig. 5 is a corresponding view showing the transposition of the strands 5 that are initially all positioned in the second stack 7. As can be seen in the figs. 4 and 5, a strand 5 which is located at a top end of a stack 6, 7 at the entrance of a stator slot (10) will define a cross-over to the other stack 7, 6 and will, up to the point of its exit out of the slot (10), follow a sloping or ascending path from the cross-over position until it has occupied all positions of said other stack 7, 6. Accordingly, each strand 5 will make one cross-over and will occupy all vertical positions of the stacks up to the point of exit out of the slot (10). However, each vertical position will be occupied by a strand 5 only once along the slot length L. In this context it should however be mentioned that slight deviations from this preferred arrangement may still be regarded as within the scope of the invention. If, for example, the number of strands is high and the transposition deviates only somewhat from 180° the strands may not occupy all vertical positions (transposition slightly less than 180°) within the slot length L or may occupy any or some of said positions twice (transposition slightly more than 180°), but the technical result will be almost the same as for a perfect 180° transposition. The scope of protection should also cover designs wherein there is a 180° transposition of the strands along a coil side but where the transposed coil side is slightly shorter than or slightly longer than the slot length L, or wherein the transposed part of the coil side extends slightly out of the slot, provided that at least some of the advantages of the inventive principle could still be achieved by such a design. However, an exact 180° transposition and exactly within the slot is preferred.

In the coil end portion 4, the strands of the bar are transposed 90, such that the strand 5 that occupied a lowermost position (i.e. a position closest to the slot bottom) of a stack 6, 7 upon exit of a first slot (10) will occupy an uppermost position of said stack 6, 7 upon entrance into the second slot (10). The 90° is achieved by means of a traditional twisting of the end portion, wherein a so called knuckle portion 9, shown in fig. 1, is obtained.

The second coil side 3 of each coil 1 either forms an upper bar or lower bar in a second stator slot (10) which it enters. Its position, upper or lower, depends on and is the opposite to the position, lower or upper, of the first coil side 2 in its respective stator slot (10), with regard to the position of another bar with which it shares the stator slot space.

The strands 5 of the second coil side 3 are transposed 180° such that the total transposition of the strands 5 of the coil sides of the coil 1 will be 180° + 180° = 360° along the two consecutive slot lengths L of the stator slots (10) in which the coil sides 2, 3 are positioned. Preferably, the transposition of the strands 5 in the second coil side 3 is identical to the transposition of the strands 5 in the first coil side 2, i.e. the pitch angle of the transposed strands is the same, the length of the transposed part is the same, etc.

## Claims

1. A rotary AC machine comprising a stator provided with a plurality of slots (10) in which there are provided stator coils (1), wherein each stator coil (1) comprises stator coil sides (2, 3) positioned in slot lengths (L), and wherein the individual coil sides (2, 3) comprise a plurality of strands (5) that are transposed in relation to each other such that the coil sides (2, 3) define Roebel bars, and wherein the coils (1) define single turn-coils, in one end of which the coil sides (2, 3) of each coil (1) are interconnected by a coil end portion (4), and in the in other end of which each coil side (2, 3) is short-circuited to a neighbouring coil side of another coil,
**characterised in that** the strands (5) are transposed 180° in each slot length (L).

2. A rotary AC machine according to claim 1, **characterised in that** all strands (5) of a plurality of strands (5) of a coil side (2, 3) positioned in said slots (10) are transposed 180°.

3. A rotary AC machine according to claim 1 or 2, **characterised in that** individual coil sides (2, 3) are interconnected by a coil end portion (4) located outside the slots (10), wherein strands (5) in each such coil end portion (4) are transposed 90° along said end portion (4).

4. A rotary AC machine according to 3, **characterised in that** each coil (1) comprises a pair of coil sides (2, 3) positioned in different stator slots (10), and that each such pair is interconnected by a coil end portion (4) located outside the slots (10), and that strands (5) in each such coil end portion (4) are transposed 90° along said end portion (4).

5. A rotary AC machine according to any one of claims 1-4, **characterised in that** the coils (1) define single turn-coils, in one end of which the coil sides (2, 3) of each coil (1) are interconnected by a coil end portion (4), and in the in other end of which each coil side (2, 3) is short circuited to a neighbouring coil side of another coil.

6. A rotary AC machine according to claim 5, **characterised in that** said coil end portion (4) comprises a plurality of strands (5) each of which is transposed 90° along said end portion (4).
